# EUROPEAN PATENT APPLICATION

(11) **EP 0 886 410 A2**
(43) Date of publication of application: **23.12.1998**
(21) Application number: 98108132.6
(22) Date of filing: 05.05.1998
(51) Int. Cl.: H04L 29/06

(54) **Data communication method, data communication apparatus, and data communication program recording medium**

(30) Priority: 08.05.1997 JP 118217/97
(71) Applicant: Matsushita Electric Industrial Co., Ltd., Kadoma-shi, Osaka 571-8501 (JP)
(72) Inventor: Sugimoto, Kuniaki, Hiroshimaken Hiroshima-shi 736-0083 (JP); Morioka, Masaaki, Hiroshimaken 735-00024 (JP); Ogawa, Noriyuki, Hiroshima-shi, 733-0007 (JP); Saeki, Yuko, Hiroshima-shi, 730-0852 (JP)
(74) Representative: Kügele, Bernhard

(57) **Abstract**

A data communication method in which transmission/receiving is performed for each frame according to an unbalanced half-duplex high-level data link control communication method, and between one and the other stations, comprises the step of: transferring transmission right to the other station, when the one station receives a frame, and the received frame is a transmission right transferring frame and is a data frame.

## Description

### FIELD OF THE INVENTION

The present invention relates to a data communication method, a data communication apparatus, and a data communication program recording medium and, more particularly to data communication in which data is transmitted/received for each frame according to an unbalanced half-duplex HDLC (High-Level Data Link Control) communication method. The present invention also relates to a data communication method, a data communication apparatus, and a data communication program recording medium in an IrDA (Infrared Data Association) communication system in which communication is performed between primary and secondary stations by infrared.

### BACKGROUND OF THE INVENTION

In recent years, infrared communications are widely used for data exchange between pieces of portable electronic equipment, for example, portable personal terminals such as note type personal computers or electronic notes, or between these electronic equipment and desktop personal computers or infrared printers. As an infrared communication method, there is an IrDA method or an ASK (Amplitude Shift Keying) method. The IrDA method is communication protocol defined for infrared communications, based on the HDLC communication method as a communication method for high-speed and high-efficiency transmission between computers, and it is commonly used.

In general, packet switching is employed for data transmission in computers or the like, in which packets each comprising data of a given size, a serial number given before/after the data, address information, or the like, are transmitted/received. A packet for use in the HDLC method or the IrDA method is termed "frame".

The frame comprises an address (A) field, a control (C) field, an information (I) field, an FCS (Frame Check Sequence) field, and a flag given before/after the frame, and there are an I(Information) frame for information (data) transfer, an S (Supervisory) frame for supervisory control in communications, and a U(Unnumbered) frame for connection or disconnection in communications.

In many cases, data to-be-transmitted is not sent in one frame, and therefore the data is divided into plural frames (I frame) . The I frame includes data to-be-transmitted in the I field, and has a serial number for checking lack of data to realize a highly reliable communication. The S frame has no I field, and is used for transmitting "receiving setup completion", "busy condition", "retransmission request", and so forth. The U frame has no number unlike the I frame, and therefore is called "non-number frame", which is used for setting communication mode, report on response or abnormal condition, or establishment or connection of data link.

As described above, the IrDA communication method is based on the HDLC communication method. In general, as the communication method, there are a full-duplex communication method in which transmission and receiving can be performed simultaneously, and a half-duplex communication method in which they cannot be performed simultaneously, and in the half-duplex communication method, a signal for switching between transmission and receiving must be defined. While the full-duplex method can be employed in the HDLC method, when employed in the IrDA method, normal communication cannot be performed. This is because the IrDA method uses base band modulation infrared that propagates in a free space for transmitting data, and interference by the infrared occurs if two or more stations simultaneously perform transmission in a communication area. For this reason, the IrDA method employs the half-duplex method, in which transmission is performed only when no infrared presents in a communication area before establishing a communication link, and transmission right is exchanged between two stations on a regular basis after establishing the communication link.

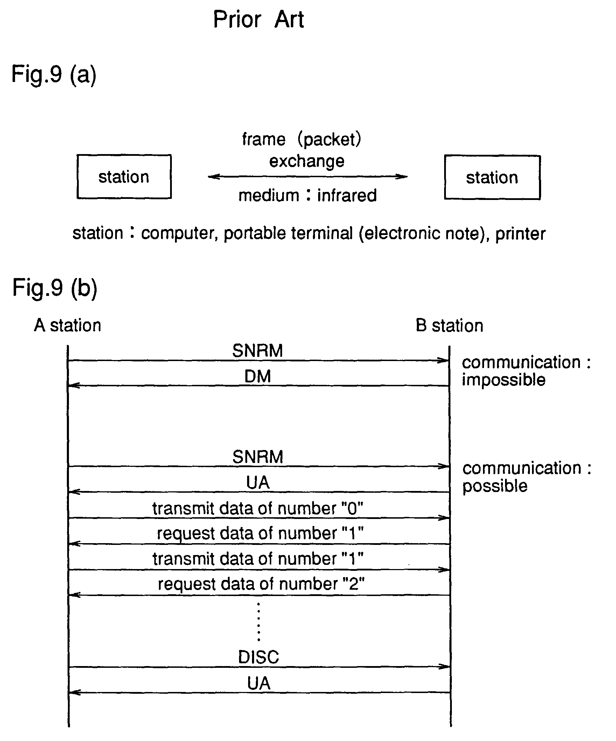

Figure 9(a) shows an application of this communication method. In the HDLC method or the IrDA method, an entity which performs transmission or receiving is called a "station", and there are a primary station and a secondary station. The primary station performs data link control for controlling communications, and the secondary station is under the control of the primary station, and the two stations performs communication by transmitting/receiving the frame as command (primary to secondary) and response (secondary to primary), which is called an "unbalanced communication method". As shown in figure 9(a), computers or electronic notes function as stations, and performs data exchange using the infrared as a transmission medium.

Figure 9(b) shows a sequence for explaining a procedure in these communication methods. As shown in the figure, A station requests connection for data transmission, and transmits SNRM frame to B station, which transmits DM frame to the A station when communication is impossible, and transmits UA frame indicating "ALL RIGHRT" when communication is possible. The SNRM frame, the DM frame, and the UA frame are all the U frame. When the B station transmits the UA frame to the A station, the two stations enter the connection state, whereby data exchange is possible.

In this illustrated example, the A station transmits data, i.e., plural I frames, to the B station. Initially, the A station gives number "0" to a first data frame, and transmits the first frame as the I frame. Upon receipt of this, the B station transmits a frame to which number "1" is given, indicating that "transmit the data of number 1". This response frame is the S frame called RR frame. The A station confirms the response of the B station, and transmits the data of number "1" to the B station. This procedure is repeated as necessary, to provide higher precision in communication of plural frames.

Upon completion of data transmission, the A station transmits the U frame indicating a disconnection request, i.e., DISC frame, to the B station, which transmits the U frame indicating 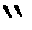 ALL RIGHT*"*, i.e., UA frame to the A station, to make disconnection between these two stations, thereby the communication is completed. In addition, in a case where abnormal communication or the like occurs in any of these stations, the station issues a disconnection request, thereby the communication is completed.

Hereinafter, (1) Transmission/Receiving of Data of Plural Frames, (2) Use of Receiving Buffer, and (3) Avoidance of self receiving will be described with reference to figures.

### (1)Transmission/Receiving of Data of Plural Frames

As mentioned previously, the half-duplex method requires establishing a rule of a procedure of exchange of transmission right, and in this rule, a frame with a bit in a predetermined position in a control field (C field) of the frame to-be-transmitted set as a poll bit or a final bit is defined as a transmission right transferring frame for transmitting transferring of the transmission right. The bit in the predetermined position is set as the poll bit in a frame which is transmitted primary to secondary station, and as the final bit in a frame which is transmitted secondary to primary station.

Exchanging transmission right all the time during communication causes power consumption to be increased due to emission of infrared for transmitting the transmission right transferring frame, so that this is undesirable to note type computers or portable terminals of which power saving is demanded. To suppress unnecessary power consumption, in a case where there is no data to-be-transmitted from primary to secondary station, the primary station transmits a transmission right transferring frame to the secondary station after a certain time has elapsed. This time is called 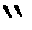 waiting time*"* and also called 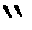 maximum turn around time*"*, during which time, the transmission right can be held.

Also, in principle, the station to which the transmission right transferring frame has been transmitted, transmits a response frame or the like. Therefore, if the secondary station does not transmit any transmission right transferring frame even after an elapse of the maximum turn around time after the primary station has transferred the transmission right to the secondary station, the primary station decides that the transmission right has not been transferred to the secondary station, and retries the failed operation.

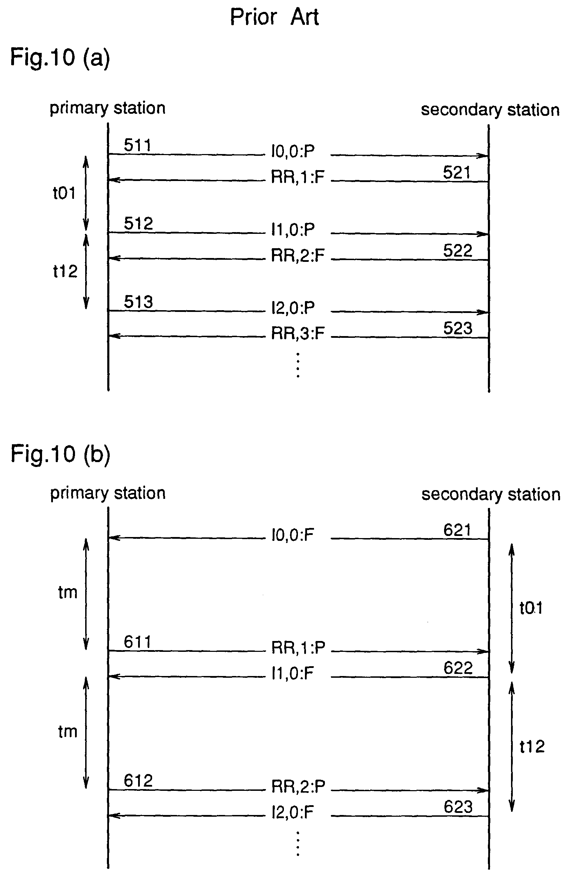

Hereinafter, communication between the primary and secondary stations in which data is transmitted while exchanging the transmission right by a prior art data communication method, will be described. Figure 10(a) shows a sequence in which data, i.e., divided plural frames are transmitted from the primary to secondary station, and figure 10(b) shows a sequence in which the same data transmission is made in the reverse direction. In the figure, "P" and "F" designate the transmission right transferring frame with the poll bit set, and the transmission right transferring frame with the final bit set, respectively. In these sequences, all the frames are transmission right transferring frames.

First, data transmission from the primary to secondary station will be described. Referring to figure 10(a), the primary station transmits an initial frame including data, i.e., an I frame 511 of transmission order number "0" as the transmission right transferring frame, to the secondary station, which transmits an RR frame 521 of receiving order number "1" as a response frame, indicating that it should receive data "1", to the primary station. Then, the primary station transmits an I frame 512 of transmission order number 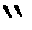 1*"* to the secondary station. Thereafter, the primary station transmits I frames of serial numbers (plural frames) to the secondary station in the same manner without delay. The elapsed time from when the primary station transmits an I frame of a certain number until it transmits an I frame of a subsequent number, i.e., t01, t12, ..., is shorter than the maximum turn around time.

Next, data transmission from the secondary to primary station will be described. Referring to figure 10(b), the secondary station transmits an initial frame including data, an I frame 621 of transmission order number "0" to the primary station. As with the above case, the frame 621 is the transmission right transferring frame, and the secondary station transfers the transmission right to the primary station and then waits for a response from the primary station. However, the primary station responds to the secondary station without transmitting data thereto. Therefore, following the rule mentioned above, the primary station transmits a response frame, i.e., an RR frame 611 to the secondary station as the transmission right transferring frame after an elapse of the maximum turn around time "tm". The transmission right having been transferred, the secondary station can transmit subsequent data, and therefore transmits an I frame 622. Thereafter, the following data is transmitted in the same manner. Since the RR frame is transmitted after an elapse of the maximum turn around time unless data transmission is made by the primary station, the elapsed time from when the secondary station transmits an I frame of a certain number until it transmits an I frame of a subsequent number, i.e., t01, t12,..., is longer than the maximum turn around time.

Indeed, the primary station may be set to perform transmission after time shorter than the maximum turn around time has elapsed. However, also in this case, virtually the same time as the maximum turn around time elapses, and therefore the secondary station waits for a long time after all.

### (2) Use of Receiving Buffer

In actuality, the primary and secondary stations are computers or the like, and in some cases, therefore, communication is performed concurrently with another task, or an interruption takes place during the communication. Hence, in these cases, received data cannot be processed immediately. So, received data is temporarily stored in a receiving buffer and then data is sequentially fetched therefrom. The receiving buffer is implemented by a high-speed storage device such as a memory, and whose size is generally determined for each frame.

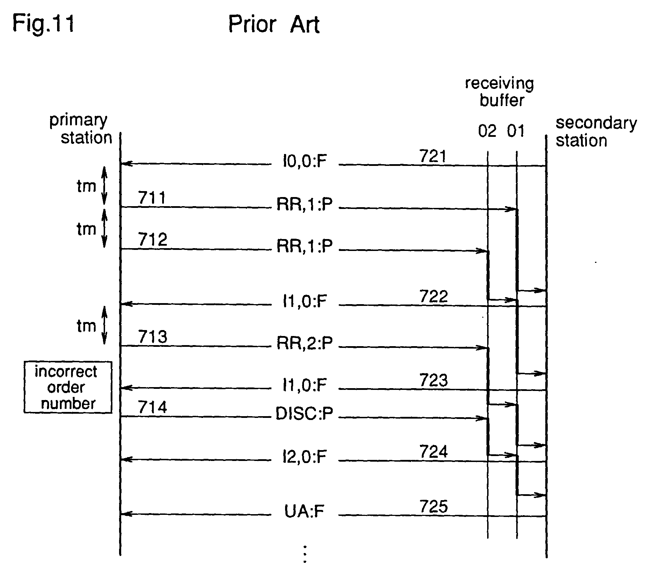

Data communication between the primary station and the secondary station provided with the receiving buffer will be described with reference to figure 11. Figure 11 shows a sequence of transmitting divided plural I frames from the secondary to primary station. All the frames are transmission right transferring frames, each of which has a poll/final bit set therein. The secondary station is provided with receiving buffers 01 and 02 for two frames, respectively.

After the secondary station has transmitted an I frame of transmission order number "0", it cannot perform receiving processing for more than the maximum turn around time (tm). The most likely reason for this is considerable processing burden of another task. During this time, the primary station transmits an RR frame 711 as an initial response frame. However, since the secondary station does not transmit any transferring frame even after an elapse of the maximum turn around time(tm) after the primary station has transferred the transmission right to the secondary station, the primary station decides that the transmission right has not been transferred to the secondary station, and retries the failed operation. The primary station responds by transmitting an RR frame 712, i.e., a retransmission frame of the RR frame 711. The frames 711 and 712 are respectively of receiving order number "1", indicating that subsequent data is numbered "1". In the secondary station in which receiving processing is delayed, the transmitted RR frames 711 and 712 are retained in the receiving buffers 01 and 02, respectively. More specifically, the frame 711 is first retained in the buffer 01, and the frame 712 is then retained in the buffer 02.

Subsequently, the secondary station performs receiving processing. After processing of the least recent frame 711 in the receiving buffer 01, the frame 712 in the buffer 02 moves to the buffer 01. The secondary station transmits an I frame 722 of transmission order number "1" corresponding to receiving order number "1" of the processed RR frame 711 to the primary station.

The primary station transmits an RR frame 713 of receiving order number "2 " in response to the transmission order number "1". Since the frame 712 is retained in the buffer 01, the frame 713 is retained in the buffer 02, and waits for processing.

Then, the secondary station processes the frame 712 retained in the receiving buffer 01. In other words, the secondary station processes the frame 712 in the receiving order before processing the most recent frame 713 transmitted from the primary station. The receiving order number of the frame 712 is "1" and, therefore it is before "2" of the most recent frame transmitted from the primary station. The secondary station transmits the I frame 722 of transmission order number "1", and then processes the frame 712. Therefore, it decides that the primary station has not received the I frame 722, and transmits an I frame 723 as a retransmission frame of the I frame 722.

Meanwhile, the primary station has transmitted an RR frame 713 of receiving order number "2", and expects that it will receive a frame of transmission order number "2". In actuality, however, the primary station receives an I frame 723 of transmission order number "1". The transmission order number "1" of the frame 723 is before transmission order number "2" expected by the primary station. In the IrDA communication method, this is assumed to be abnormal communication, and the communication link can be disconnected by transmitting a DISC frame 714 as a disconnection request frame from the primary station.

The secondary station processes the RR frame 713 retained in the receiving buffer 02, and then transmits an I frame 724 of transmission order number "2". However, the primary station has transmitted the disconnection request. Therefore, the secondary station receives and processes the disconnection request DISC frame 714, and transmits a disconnection response UA frame 725, thereby the communication link between the primary and secondary stations is disconnected.

### (3) Avoidance of Self Receiving

In general, in optical communications such as infrared communications, a computer or a portable terminal is provided with a communication port in which a light receiving unit and a light emitting unit are integrated or close to each other. This causes a receiving/emitting optical module to receive light emitted by itself, thereby processing data transmitted by itself as received data, which is called "self receiving".

Solutions to this problem are as follows.
(A) Data which is being transmitted is masked in hardware in the module to prevent itself from receiving data.
(B) When decided that received data is data which is transmitted by itself, received data is abandoned in software. This processing is performed in software which mediates between the optical communication port as a hardware and an OS as a basic software, namely, by a device driver software.
(c) When decided that received data is data which is transmitted by itself, received data is abandoned in software. This processing is performed by an upper software, for example, communication software.

In a case where a receiving/emitting optical module with no self receiving prevention measures taken in the hardware in (A) and the device driver in (B) is used, self receiving prevention is performed in the upper software.

In case of (c), in order to abandon self-received data properly, it is necessary to accurately detect a transmission starting time and a transmission ending time. However, this is not always easy and communication troubles tend to occur. For example, in a case where recognition of transmission completion of one station is delayed, and data transmission from the other station has already started at that point in time, the one station decides that it is making transmission, and real received data from the other station is assumed to be self-received data and might be abandoned, which makes it impossible to construct received frames from received data. As a consequence, communication becomes impossible. In another case where the self-received frame is processed without taking self receiving prevention measures, the communication link might be disconnected by collision in the primary station immediately after it has been established.

Thus, there have been several problems with the prior art IrDA communication method, which are summarized as follows.
1) As described in the prior art (1), in the prior art IrDA communication method, when the primary station transmits data, i.e., divided plural frames, it transfers the transmission right to the secondary station without waiting for the maximum turn around time. This allows the primary station to receive a response frame in a short time, and to transmit a frame including subsequent data, resulting in higher efficiency in data transmission. On the other hand, when there is no data to-be-transmitted from the primary station and the secondary station transmits data, the primary station transfers the transmission right to the secondary station only after an elapse of about the maximum turn around time after it has received data from the secondary station, so that the secondary station must wait for relatively long time for each frame to transmit plural frames, causing reduced efficiency in communication. As mentioned previously, in many cases, data cannot be transmitted in one frame, and divided plural frames are transmitted. As a result, performance of the whole system is degraded.
2) As described in the prior art (2), in a case where the secondary station cannot perform receiving processing for more than the maximum turn around time mainly because of the increased burden of another processing, the primary station transmits the transmission right transferring frame to the secondary station again, so that two or more transmission right transferring frames from the primary station are retained in the receiving buffers in the secondary station. If the secondary station processes these frames in the order from least to most recent, incorrectness of order numbers occurs, causing disconnection. In brief, when receiving processing is performed using the receiving buffers, disconnection may occur even if processing is performed following the correct procedure.
3) As described above in the prior art (3), it is difficult to reliably abandon self-received data at a high level, so that real received data is abandoned as self-received data by mistake, or the self-received data is processed as the real data, causing communication troubles.

### SUMMARY OF THE INVENTION

It is an object of the present invention to provide a data communication method wherein, during communication in which transmission right is mutually transferred, an increase in power consumption resulting from frequent transmission of a transmission right transferring frame is suppressed, and reduced efficiency in communication caused by setting a waiting time in transmission of the transmission right transferring frame can be avoided.

It is another object of the present invention to provide a data communication method in which frames retained in buffers are sequentially processed in the order from least to most recent, to prevent incorrectness of order number.

It is still another object of the present invention to provide a data communication method in which abandoning of data or self receiving caused by false recognition can be avoided even if a hardware or a device driver has no capability of self receiving prevention.

It is a further object of the present invention to provide a data communication apparatus which performs communication by the data communication method, and a recording medium in which a data communication program which can implement the data communication method using computers or the like is stored.

Other objects and advantages of the present invention will become apparent from the detailed description given hereinafter; it should be noted that, however, that the detailed description and specific embodiments are given by way of illustration only, since various changes and modifications within the spirit and scope of the invention will become apparent to those skilled in the art from this detailed description.

According to a first aspect of the present invention, a data communication method in which transmission/receiving is performed for each frame according to an unbalanced half-duplex high-level data link control communication method, and between one and the other stations, comprises the step of: transferring transmission right to the other station, when the one station receives a frame, and the received frame is a transmission right transferring frame and is a data frame.

Therefore, with respect to a frame other than a data frame, which is not necessarily transmitted continuously, there is waiting time before transmission right is transferred, thereby emission of infrared is reduced, and with respect the data frame, transmission right is immediately transferred.

According to a second aspect of the present invention, in the data communication method of the first aspect further comprises: a frame decision step including a transferring frame decision step in which it is decided whether the received frame is a transmission right transferring frame; and a data frame decision step in which it is decided whether the received frame is a data frame; and a transmitting step in which a transmission right transferring frame is transmitted to the other station when decided that the received frame is the transmission right transferring frame and the data frame in the frame decision step.

Therefore, with respect to a frame other than a data frame, there is waiting time before transmission right is transferred, and with respect the data frame, transmission right is immediately transferred.

According to a third aspect of the present invention, a data communication method in which transmission/receiving is performed for each frame according to an unbalanced half-duplex high-level data link control communication method, and between one and the other stations comprises the steps of: temporarily storing a frame in a receiving buffer, and then fetching the frame therefrom when the frame is received; and deciding whether a transmission right transferring frame is the most recent, when a frame of frames stored in the receiving buffer which is fetched therefrom and processed is the transmission right transferring frame, processing the transmission right transferring frame when decided the transmission right transferring frame is the most recent, and abandoning the transmission right transferring frame when decided that the transmission right transferring frame is not the most recent.

Therefore, when there are plural transmission right transferring frames in receiving buffer due to delay, the most recent transmission right transferring frame is processed.

According to a fourth aspect of the present invention, the data communication method of the third aspect further comprises: a most recent frame extracting step including a sequential reading step in which a least recent stored frame is read from the receiving buffer where received frames are temporarily stored; a transferring frame decision step in which it is decided whether the read least recent frame is a transmission right transferring frame; a stored frame decision step in which it is decided whether a transmission right transferring frame is stored in the receiving buffer; and a received frame abandoning step in which the read received frame is abandoned when decided that the read received frame is a transmission right transferring frame in the transferring frame decision step and when decided a transmission right transferring frame is stored in the receiving buffer in the stored frame decision step; and a processing step in which receiving processing is performed to a received frame which is not abandoned but output in the most recent frame extracting step.

Therefore, when there are plural transmission right transferring frames in receiving buffers, the most recent transmission right transferring frame is processed.

According to a fifth aspect of a present invention, a data communication method in which transmission/receiving is performed for each frame according to an unbalanced half-duplex high-level data link control communication method, and between one and the other stations, comprises abandoning a received frame when an address field number of the received frame matches an address field number of a frame transmitted from the one station, in the connection state.

Therefore, from the comparison result, it is decided whether there occurred self receiving, and then appropriate processing is performed.

According to a sixth aspect of the present invention, the data communication method of the fifth aspect further comprises: a self receiving decision step including a connection decision step in which it is decided whether current communication is in the connection state; an address field decision step in which comparison is made between the address field number of the received frame and the address field number of the frame transmitted from the one station, to decide whether there is a match between them; and a received frame abandoning step in which the received frame is abandoned when decided that the communication is in the connection state in the connection decision step and when decided that there is the match in the address field decision step; and a processing step in which receiving processing is performed to a received frame which is not abandoned but output in the self receiving decision step.

Therefore, from the comparison result, it is decided whether there occurred self receiving, and then appropriate processing is performed.

According to a seventh aspect of the present invention, a data communication method in which transmission/receiving is performed for each frame according to an unbalanced half-duplex high-level data link control communication method, and between one and the other stations, comprises temporarily storing a frame in a receiving buffer and then fetching the frame there from when the frame is received; processing a most recent frame of frames stored in the receiving buffer with respect to a transmission right transferring frame, and abandoning a transmission right transferring frame other than the most recent; and transferring transmission right to the other station when the processed most recent frame is a transmission right transferring frame and is a data frame.

Therefore, with respect to a frame other than a data frame, there is waiting time before transmission right is transferred, and with respect the data frame, transmission right is immediately transferred. In addition, when there are plural transmission right transferring frames in receiving buffers, the most recent transmission right transferring frame is processed.

According to an eighth aspect of the present invention, a data communication method in which transmission/receiving is performed for each frame according to an unbalanced half-duplex high-level data link control communication method, and between one and the other stations, comprises the steps of: abandoning a received frame when an address field number of the received frame matches to an address field number of a frame transmitted from the one station in the connection state; and transferring transmission right to the other station when a frame which is not abandoned but processed is a transmission right transferring frame and is a data frame.

Therefore, with respect to a frame other than a data frame, there is waiting time before transmission right is transferred, and with respect the data frame, transmission right is immediately transferred. In addition, from the comparison, it is decided whether there occurred self receiving, and then appropriate processing is performed.

According to a ninth aspect of the present invention, a data communication method in which transmission/receiving is performed for each frame according to an unbalanced half-duplex high-level data link control communication method, and between one and the other stations, comprises abandoning a received frame when an address field number of the received frame matches an address field number of a frame transmitted from the one station in the connection state; temporarily storing a received frame which is not abandoned but processed in a receiving buffer and then fetching the received frame therefrom; and processing a most recent frame of frames stored in the receiving buffer with respect to a transmission right transferring frame, and abandoning a transmission right transferring frame other than the most recent.

Therefore, when there are plural transmission right transferring frames in receiving buffers, the most recent transmission right transferring frame is processed. In addition, from the comparison, it is decided whether there occurred self receiving, and then appropriate processing is performed.

According to a tenth aspect of the present invention, a data communication method in which transmission/receiving is performed for each frame according to an unbalanced half-duplex high-level data link control communication method, and between one and the other stations, comprises the steps of: abandoning a received frame when an address field number of the received frame matches an address field number of a frame transmitted from the one station in the connection state; temporarily storing a received frame which is not abandoned but processed in a receiving buffer and then fetching the received frame therefrom; processing a most recent frame of frames stored in the receiving buffer with respect to a transmission right transferring frame, and abandoning a transmission right transferring frame other than the most recent; and transferring transmission right to the other station when the most recent frame is a transmission right transferring frame and is a data frame.

Therefore, with respect to a frame other than a data frame, there is waiting time before transmission right is transferred, and with respect the data frame, transmission right is immediately transferred. In addition, when there are plural transmission right transferring frames in receiving buffers, the most recent is processed. Further, from the comparison result, it is decided whether there occurred self receiving, and then appropriate processing is performed.

According to an eleventh aspect of the present invention, a data communication apparatus which performs transmission/receiving for each frame according to an unbalanced half-duplex high-level data link control communication method, comprises the steps of a transmitting/receiving unit for receiving data as a frame through a transmission medium, and transmitting data as a frame to the transmission medium; a frame creating unit for creating a frame to be transmitted and outputting the frame to the transmitting/receiving unit; a frame decision unit for performing frame decision including transferring frame decision in which it is decided whether the received frame is a transmission right transferring frame and data frame decision in which it is decided whether the received frame is a data frame; and a communication control unit for instructing the frame creating unit to create and output a transmission right transferring frame when decided that the received frame is the transmission right transferring frame and is the data frame from a result of the frame decision of the frame decision unit.

Therefore, with respect to a frame other than a data frame, which is not necessarily transmitted continuously, there is waiting time before transmission right is transferred, thereby emission of infrared is reduced, and with respect the data frame, transmission right is immediately transferred.

According to a twelfth aspect of the present invention, a data communication apparatus which performs transmission/receiving for each frame according to an unbalanced half-duplex high-level data link control communication method, comprises a transmitting/receiving unit for receiving data as a frame through a transmission medium, and transmitting data as a frame to the transmission medium; a receiving buffer for temporarily storing the frame received by the transmitting/receiving unit; a frame decision unit for performing sequential reading in which a least recent stored frame is read from the receiving buffer where the received frame is temporarily stored, transferring frame decision in which it is decided whether the read least recent frame is a transmission right transferring frame, stored frame decision in which it is decided whether a transmission right transferring frame is stored in the receiving buffer, and received frame abandoning in which the read received frame is abandoned when decided that the read received frame is the transmission right transferring frame and when decided that the transmission right transferring frame is stored in the receiving buffer, thereby extracting the most recent frame from the frames stored in the receiving buffer with respect to a transmission right transferring frame; and a communication control unit for performing control so that the frame extracted by the frame decision unit is processed.

Therefore, when there are plural transmission right transferring frames in receiving buffers due to delay, the most recent transmission right transferring frame is processed.

According to a thirteenth aspect of the present invention, a data communication apparatus which performs transmission/receiving for each frame according to an unbalanced half-duplex high-level data link control communication method, comprises: a transmitting/receiving unit for receiving data as a frame through a transmission medium, and transmitting data as a frame to the transmission medium; a frame decision unit for performing connection decision in which it is decided whether current communication is in the connection state, with respect to the frame received by the transmitting/receiving unit, and address field decision in which comparison is made between an address field number of the received frame and an address field number of a frame transmitted from the apparatus to decide whether there is a match between them, thereby deciding whether the received frame is a self-received frame in the connection state, and abandoning the self-received frame when decided that the received frame is the self-received frame in the connection state; a communication control unit for performing control so that a received frame which is not abandoned by the frame decision unit is processed.

Therefore, from the comparison result, it is decided whether there occurred self receiving, and then appropriate processing is performed.

According to a fourteenth aspect of the present invention, a recording medium in which a data communication program which performs transmission/receiving for each frame according to an unbalanced half duplex high-level data link control communication method is stored, comprises a frame receiving step in which a frame is received; a transferring frame decision step in which it is decided whether the received frame is a transmission right transferring frame; a data frame decision step in which it is decided whether the received frame is a data frame; a transmission right transferring frame creating step in which a transmission right transferring frame is created when decided that the received frame is the transmission right transferring frame in the transferring frame decision step and when decided that the received frame is the data frame in the data frame decision step; and a transmitting step in which the created transmission right transferring frame is transmitted.

By executing the program, with respect to a frame other than a data frame, which is not necessarily transmitted continuously, there is waiting time before transmission right is transferred, thereby emission of infrared is reduced, and with respect the data frame, transmission right is immediately transferred.

According to a fifteenth aspect of the present invention, a recording medium in which a data communication program which performs transmission/receiving for each frame according to an unbalanced half duplex high-level data link control communication method is stored, comprises a frame receiving step in which a frame is received; a temporal storage step in which the received frame is temporarily stored in a receiving buffer; a sequential reading step in which a least recent stored frame is read from the receiving buffer; a transferring frame decision step in which it is decided whether the read least recent received frame is a transmission right transferring frame; a stored frame decision step in which it is decided whether a transmission right transferring frame is stored in the receiving buffer; a received frame abandoning step in which the read received frame is abandoned when decided that the read received frame is the transmission right transferring frame in the transferring frame decision step and when decided that the transmission right transferring frame is stored in the receiving buffer in the stored frame decision step; a most recent frame extracting step in which the read received frame is output when decided that the read received frame is not the transmission right transferring frame in the transferring frame decision step, or when decided that the transmission right transferring frame is not stored in the receiving buffer in the stored frame decision step; and a processing step in which the received frame obtained in the most recent frame extracting step is processed.

By executing the program, when there are plural transmission right transferring frames in receiving buffers due to delay, the most recent is processed.

According to a sixteenth aspect of the present invention, in a recording medium in which a data communication program which performs transmission/receiving for each frame according to an unbalanced half duplex high-level data link control communication method and between the one and the other stations, is stored, the program comprises the steps of: a frame receiving step in which a frame is received; a connection decision Step in which it is decided whether current communication is in the connection state; an address field decision step in which comparison is made between an address field number of the received frame and an address field number of a frame transmitted from the one station, to decide whether there is a match between them; and a received frame abandoning step in which the received frame is abandoned when decided that the communication is in the connection state in the connection decision step and when decided that there is the match in the address field decision step; and a processing step in which receiving processing is performed to the received frame when decided that the communication is not in the connection state in the connection decision step, or when decided that there in no match in the address field decision step.

By executing the program, from the comparison result, it is decided whether there occurred self receiving, and then appropriate processing is performed.

### BRIEF DESCRIPTION OF THE DRAWINGS

Figure 1 is a block diagram showing a construction of a data communication apparatus according to a first embodiment of the present invention.

Figure 2 is a flowchart showing a procedure of received frame decision processing of the first embodiment.

Figure 3 is a diagram of a sequence showing communication state of the first embodiment.

Figure 4 is a block diagram showing a construction of a data communication apparatus according to a second embodiment of the present invention.

Figure 5 is a flowchart showing a procedure of a most recent frame extraction processing of the second embodiment.

Figure 6 is a diagram of a sequence showing communication state of the second embodiment.

Figure 7 is a flowchart showing a procedure of self receiving decision processing according to a third embodiment of the present invention.

Figure 8 is a diagram of a sequence showing communication state of the third embodiment.

Figure 9(a) is a diagram showing communication between stations in the prior art data communication, and figure 9(b) is a diagram of a sequence showing a general communication procedure in the prior art data communication.

Figure 10 is a diagram of a sequence showing data communication of plural frames in the prior art data communication.

Figure 11 is a diagram of a sequence showing data communication using receiving buffers in the prior art data communication.

### DETAILED DESCRIPTION OF THE PREFERRED EMBODIMENTS

Now, preferred embodiments of the present invention will be described with reference to figures.

### Embodiment 1.

In a data communication method according to a first embodiment, when a primary station receives a data transmission frame during communication processing, it transmits a transmission right transferring frame immediately, thereby efficiency in communication is increased.

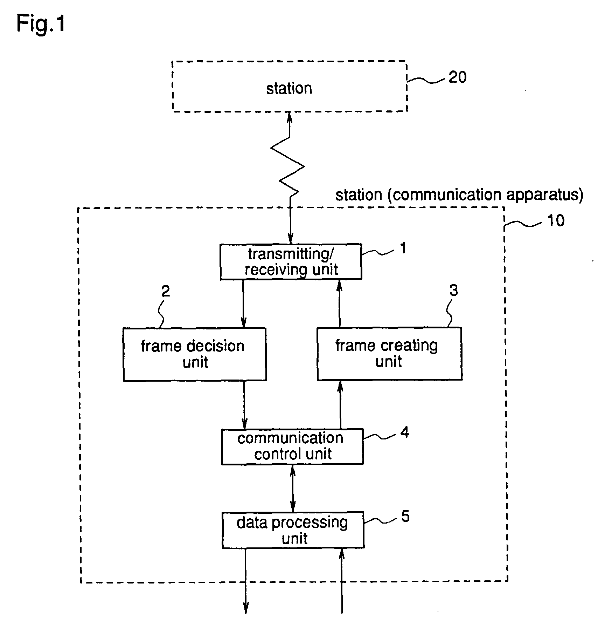

Figure 1 is a block diagram showing a construction of a data communication apparatus according to a first embodiment of the present invention. Referring to figure 1, there is illustrated a data communication apparatus 10 of the first embodiment. The data communication apparatus 10 serves as one station, and performs communication as the primary station herein. A station 20 serves as the other station, which communicates with the station 10 through a transmission medium such as infrared, as the secondary station herein.

The data communication apparatus (primary station) 10 comprises a transmitting/receiving unit 1, a frame decision unit 2, a frame creating unit 3, a communication control unit 4, and a data processing unit 5. These units function as stated below.

The transmitting/receiving unit 1 is used for transmitting/receiving data for each frame. The frame decision unit 2 is used for performing decision to the frame received by the transmitting/receiving unit 1, and outputting a decision result and the received frame to the communication control unit 4. The frame creating unit 3 is used for creating a frame to-be-transmitted to the station 20 and outputting the frame to the transmitting/receiving unit 1. The communication control unit 4 is used for controlling processing of the received frame output from the frame decision unit 2. More specifically, the communication control unit 4 is used for instructing the data processing unit 5 to perform processing, or instructing the frame creating unit 3 to create a frame, on the basis of the decision result of the frame decision unit 2. The data processing unit 5 is used for obtaining data included in the received frame, and outputting the data externally, to be subjected to operation, displayed, or recorded. The secondary station 20 has the same construction as the primary station 10.

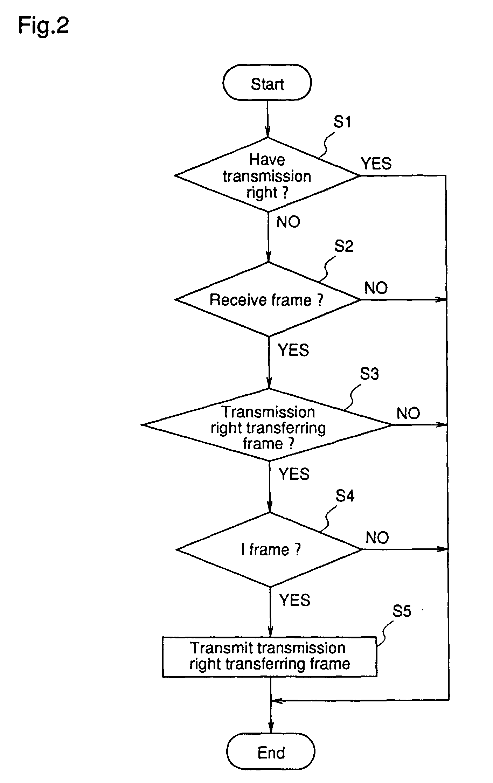

Figure 2 is a flowchart showing a procedure of the received frame decision performed by the primary station 10 in communication of the first embodiment. In the figure, Steps S1 to S5 are a transmission right decision step, a destination decision step, a transferring frame decision step, a data frame decision step, and a transmission right transferring step, respectively. Specifically, in step S1, presence/absence of the transmission right is decided. In step 2, it is decided whether a frame for the one station is received. In step 3, it is decided whether a received frame is a transmission right transferring frame. In step 4, it is decided whether a received frame is an I frame. In step 5, the transmission right is transferred to the other station.

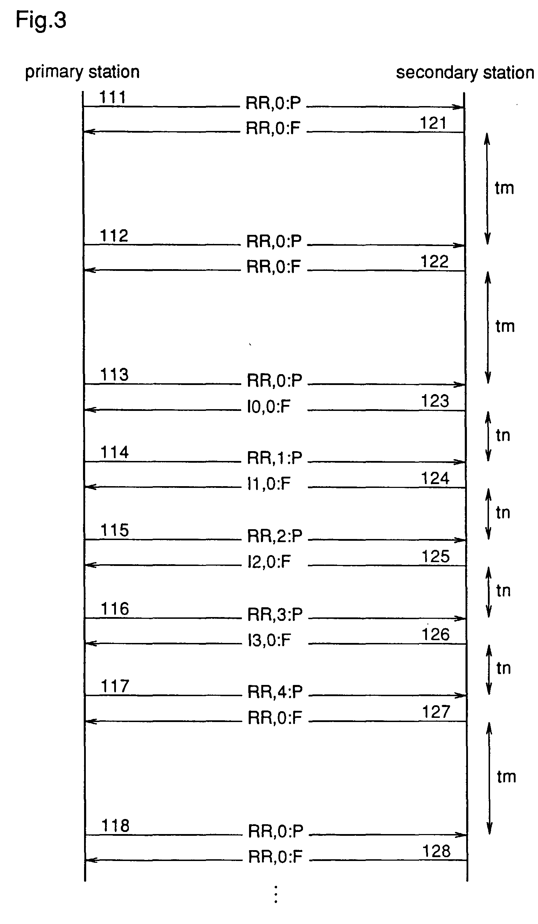

Figure 3 is a diagram showing a communication sequence in which data of plural frames is transmitted as I frames from the secondary to primary station. Hereinafter, operation of the data communication apparatus of the first embodiment will be described following figure 3 and with reference to figures 1 and 2. Frames in figure 3 are all transmission right transferring frames, each of which has a poll/final bit set therein.

Initially, the primary station 10 transmits an RR frame 111 to the secondary station 20. In response to this, the secondary station 20 which has not started transmission, transmits an RR frame 121 as a response frame, since the frame 111 is a transmission right transferring frame.

Upon receipt of the frame 121 from the secondary station 20, the transmitting/receiving unit 1 of the primary station 10 outputs the frame 121 to the frame decision unit 2, which performs the received frame decision to the frame 121 as shown in figure 2.

This decision processing will be described along flow in figure 2. In step 1, it is decided whether the one station has the transmission right. When decided that it does not, in step 2, the received frame decision is continued, whereas when decided that it has, the decision is completed. In step 2, the frame decision unit 2 decides whether the received frame is for the one station. When decided that it is, step 3 is performed, whereas when decided that it is not, the decision is completed. In step 3, it is decided whether the received frame is the transmission right transferring frame, and when decided it is, step 4 is performed, whereas when decided it is not, the decision processing is completed.

In step 4, it is decided whether the transmission right transferring frame is an I frame. When decided it is, that is, the primary station has received the data from the secondary station, in step 5, the frame decision unit 2 outputs a request for transferring the transmission right to the communication control unit 4. Upon receipt of the request, the communication control unit 4 transmits the request to the frame creating unit 3, which creates a transmission right transferring frame and outputs the frame to the transmitting/receiving unit 1, which transmits the frame to the secondary station 20, thereby transferring the transmission right to the other station. Then, the primary station 10 completes the received frame decision. In other words, when the I frame (transmission right transferring frame) with a poll/final bit set is received, step 5 is performed, thereby the transmission right is immediately transferred to the other station without waiting for the maximum turn around time unlike in the prior art example.

On the other hand, when decided in Step S4 that the transmission right transferring frame is not the I frame, the decision is completed without step 5. When the decision is completed in any of the steps, the frame decision unit 2 outputs the received frame and the decision result to the communication control unit 4.

The communication control unit 4 processes the received frame and controls communication on the basis of the decision result. Where the received frame is a data frame, the control unit 4 instructs the data processing unit 5 to output the received frame, while where the received frame is a control frame, the control unit 4 instructs the frame creating unit 3 to create a response frame. Where the received frame is not for the one station, or it is in an incorrect format, the control unit 4 abandons the frame, and further, instructs the frame creating unit 3 to create a frame if desired.

When decided that the received frame is not the I frame (for example RR frame), or is not the transmission right transferring frame, in any of the decision in figure 2, data decision is completed without step 5. Therefore, as in the prior art processing, after an elapse of the maximum turn around time after the one station has acquired the transmission right, the transmission right is transferred to the other station.

Along flow in figure 2, when the RR frame 121 in figure 3 is received, in step 1, it is decided that the one station "does not have transmission right", in step 2, it is decided that the received frame is the frame for the one station, in step 3, it is decided it is the transmission right frame, in step 4, it is decided that the frame 121 is not the I frame, and therefore the received frame decision is completed without step 5.

The communication control unit 4 instructs the frame creating unit 3 to create a response frame after an elapse of the maximum turn around time "tm" as in the prior art, on the basis of the decision result and the received frame. The frame creating unit 3 creates a response frame as the transmission right transferring frame, and outputs the response frame to the transmitting/receiving unit 1, which outputs the response frame to the secondary station 20. Thus, the RR frame 112 in figure 3 is transmitted.

In response to this, the secondary station 20 transmits an RR frame 122 to the primary station 10 as shown in figure 3. The frame 122 is processed as in the case of the frame 121, and an RR frame 113 is transmitted from the primary station 10 to the secondary station 20 after an elapse of the maximum turn around time "tm".

The secondary station 20 starts transmitting data to the primary station 10, and transmits a first data frame, i.e., an I frame 123 to the primary station 10, which performs the received frame decision along flow in figure 2. In this case, in step 4, it is decided the received frame is the I frame, and therefore step 5 is performed. As shown in figure 3, in response to the I frame 123, a response frame 114 is transmitted immediately without waiting for the maximum turn around time (tn < tm), and thereby the transmission right is transferred to the secondary station 20.

Upon completion of the decision processing, the communication control unit 4 receives a result (the received frame is a data frame) and the received frame, and outputs the frame to the data processing unit 5, which performs data processing.

Since the transmission right has been transferred to the secondary station 20 using the RR frame 114, now, the secondary station 20 transmits a subsequent data frame 124. Likewise, in response to the I frames, 124, 125, and 126, the response frames 115, 116, and 117 are immediately transmitted, thereby the transmission right is quickly transferred.

Thereafter, a frame 127 transmitted from the secondary station 20 is not a data frame but an RR frame, and therefore it is processed as in the case of the frame 121 or 122, thereby an RR frame 118 is transmitted as a response frame after an elapse of the maximum turn around time.

As thus far described, in the data communication method according to the first embodiment, in the primary station, the received frame decision is performed, in which it is decided whether the received frame is a data frame. Therefore, in a case where a frame other than the data frame is received from the secondary station, the RR frame is transmitted after an elapse of the maximum turn around time, thereby unnecessary emission of infrared caused by frequent transmission of the transmission right transferring frame does not occur as in the prior art IrDA communication method, which reduces power consumption. Further, only when the I frame is received, the RR frame is immediately transmitted without waiting for the maximum turn around time, so that the secondary station can transmit a subsequent I frame immediately without waiting for more than the maximum turn around time per frame transmission unlike in the prior art example, resulting in reduced transmission time.

In addition, the data communication apparatus according to the first embodiment, comprises the transmitting/receiving unit 1 for transmitting/receiving frames, the frame decision unit 2 for deciding whether the frame received by the transmitting/receiving unit 1 is a data frame (I frame), the communication control unit 4 for giving an instruction for transferring the transmission right when decided on the basis of the decision of the frame decision unit 2 that the data frame has been received, and the frame creating unit 3 for creating the transmission right transferring frame in accordance with the instruction of the communication control unit 4 and outputting the frame to the transmitting/receiving unit 1, and when the apparatus receives a frame other than a data frame, time before transmitting the transmission right transferring frame is made longer to save power consumption, while when it receives the data frame, it immediately transmits the transmission right transferring frame, whereby efficiency in communication is increased.

Although in the first embodiment window size is 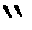 1*"*, that is, the number of frames to-be-transmitted while the transmission right is retained is 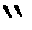 1*"*, in the window size other than 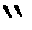 1*"*, the same effects as provided by the size 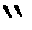 1*"* are obtained.

### Embodiment 2.

In a data communication method according to a second embodiment of the present invention, decision is performed to a received frame stored in a receiving buffer and only the most recent received frame is processed, thereby communication error is avoided.

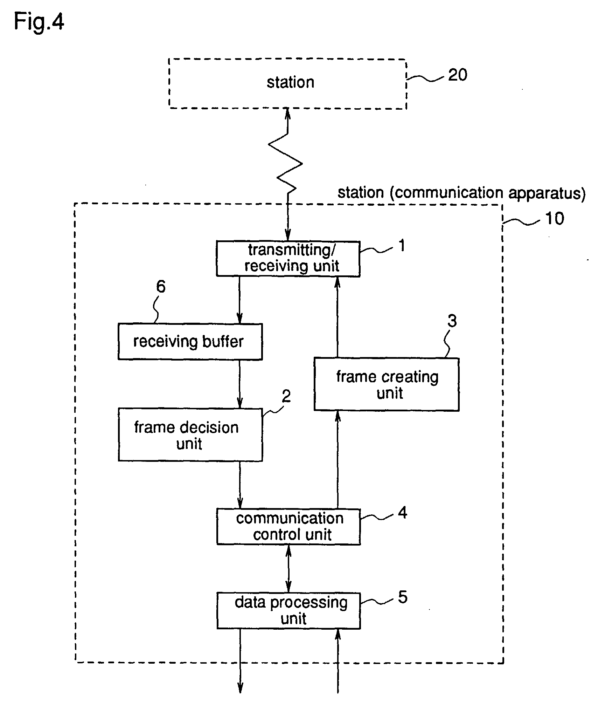

Figure 4 is a block diagram showing a construction of the data communication apparatus according to a second embodiment of the present invention. In this embodiment, assume that reference numerals 10 and 20 designates secondary and primary stations, respectively. In the figure, a receiving buffer 6 of the secondary station 10 is used for temporarily storing a frame received by a transmitting/receiving unit 1. The other components are referred to by the same reference numerals in figure 1 of the first embodiment, and therefore will not be described herein.

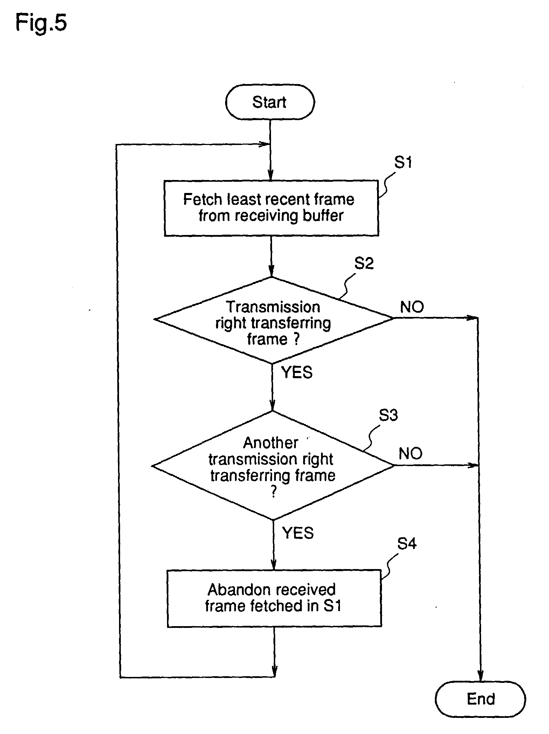

Figure 5 is a flowchart showing a procedure of extraction of the most recent frame of the secondary station 10 in communication according to the second embodiment. In the figure 5, Steps S1 to S4 are a sequential read step, a transferring frame decision step, a stored frame decision step, and a received frame abandoning step, respectively. Specifically, in Step S1, the least recent frame is fetched from the receiving buffer, in Step S2, it is decided whether the frame fetched in Step S1 is the transmission right transferring frame, in Step S3, it is decided whether there is a transmission right transferring frame in the receiving buffer, and in Step S4, the received frame fetched in Step S1 is abandoned.

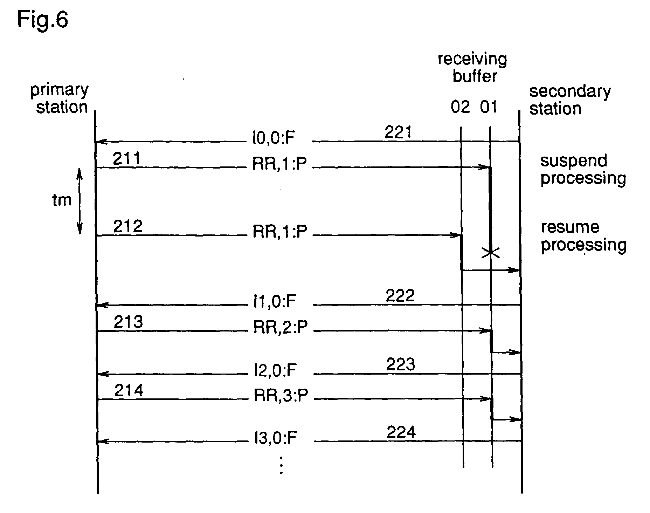

Figure 6 shows a sequence of transmitting data, i.e., plural frames as I frames from the secondary to primary station in communication according to the second embodiment. As in the prior art example (2), the secondary station 10 is provided with receiving buffers 01 and 02 for two frames, respectively. Hereinafter, operation of the data communication apparatus of the second embodiment will be described following figure 6 and with reference to figures 4 and 5. All the frames in figure 6 are transmission right transferring frames, each of which has a poll/final bit set therein.

Upon start of data transmission, the secondary station 10 transmits first data, i.e., an I frame 221 of transmission order number "0", to the primary station. After transmitting the I frame 221, the secondary station 10 cannot perform receiving processing for more than the maximum turn around time (tm), mainly because of considerable processing burden of another task.

Upon receipt of the I frame 221 of transmission order number "0", the primary station 20 transmits an RR frame 211 of subsequent order number "1", to the secondary station 10, the transmitting/receiving unit 1 of which stores the RR frame 211 in the receiving buffer 01.

The primary station, although it has requested transmission of a data frame of order number "1", the frame is not transmitted thereto even after an elapse of the maximum turn around time 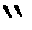 tm*"*, so that it transmits an RR frame 212, i.e., a retransmission frame of the frame 211 to the secondary station 10, the transmitting/receiving unit 1 of which stores the RR frame 212 in the receiving buffer 02.

When the secondary station 10 resumes communication after receiving and storage of the RR frame 212, it extracts the most recent frame from received frames stored in the receiving buffer 6 as shown in figure 5. This is described with reference to figure 5.

Referring to figure 5, in Step S1, the frame decision unit 2 fetches the least recent received frame from the receiving buffer 6. In Step S2, it is decided whether the frame is a transmission right transferring frame, and when decided that it is in Step S2, Step 3 is performed, or otherwise, extraction of the most recent frame is completed. In Step 3, it is decided whether there is another transmission right transferring frame in the receiving buffer, and when decided there is a transmission right transferring frame, step 4 is performed. In Step S4, the received frame fetched in Step S1 is abandoned, and again in Step S1, the least recent received frame is fetched from the receiving buffer 6. When decided in Step S3 there is no transmission right transferring frame, extraction of the most recent frame is completed without Step S4. Upon completion of extracting the most recent frame in flow in figure 5, the frame decision unit 2 outputs the obtained (not abandoned) received frame to the communication control unit 4.

A case in which the secondary station 10 resumes processing after receiving and storage of the RR frame 212 as shown in figure 6, and performs processing in figure 5, will be described. In Step S1, the least recent frame 211 stored in the receiving buffer 6 is fetched therefrom by the frame decision unit 2.

In Step S2, it is decided whether the frame 211 is a transmission right transferring frame, and when decided that it is, Step S3 is performed. The frame decision unit 2 recognizes that the received frame 212, i.e., the transmission right transferring frame, is stored in the buffer 02, by referring to the receiving buffer 6, and therefore a decision result in Step S3 is "YES (PRESENT)". Then, Step S4 is performed, and the frame 211 is abandoned.

Subsequently, the Step S1 is performed again, and the frame 212 is fetched from the receiving buffer 6. Step S2 is performed as described above, and in Step S3, decision is made. In this case, since the frames 211 and 212 have been fetched from the buffers 01 and 02, respectively, decision is "NO (NOT PRESENT)", and therefore extraction of the most recent frame is completed without Step S4. The frame decision unit 2 outputs the frame 212 to the communication control unit 4, thereby the secondary station 10 recognizes that transmission of data of order number "1" is being requested.

As shown in figure 6, communication is smoothly performed without delay, after transmission of the I frame 222. On this occasion, every time a frame is fetched in Step S1 in flow in figure 5, in Step S3, decision is made, and on the basis of the decision, processing is completed without Step S4, so that the frame fetched in Step S1 is processed.

As thus far described, the data communication method according to the second embodiment comprises performing sequential read in which the least recent received frame stored in the receiving buffer is read therefrom, transferring frame decision in which it is decided whether the received frame read in the sequential read is a transmission right transferring frame, stored frame decision in which it is decided whether there is another transmission right transferring frame in the receiving buffer when decided that the received frame is the transmission right transferring frame in the transferring frame decision, and most recent frame extraction in which the received frame read in the sequential read is abandoned when decided there is another transmission right transferring frame in the stored frame decision, and the sequential read is performed again. In this method, when plural transmission right transferring frames are held in the receiving buffer, only the most recent frame is processed and the other frames are abandoned. Therefore, incorrectness of data order and disconnection of a link caused by sequentially processing the same frames 211 and 212 are avoided, unlike in the prior art example (2).

In addition, the data communication apparatus according to the second embodiment, comprises the transmitting/receiving unit 1 for transmitting/receiving a frame, the receiving buffer 6 for temporarily storing the frame received by the transmitting/receiving unit 1, and the frame decision unit 2 which abandons transmission right transferring frames other than the most recent of plural transmission right transferring frames held in the receiving buffer 6, and obtains the most recent frame. In this apparatus, in a case where delay occurs in communication, thereby superfluous transmission right transferring frames are stored in the receiving buffer, only the most recent frame of them is processed. Therefore, communication error caused by processing of the superfluous received frames, which may occur in the prior art apparatus, is avoided, resulting in smooth communication.

Yet in addition, both the most recent frame extraction processing of the second embodiment, and the received frame decision processing of the first embodiment may be performed. In this case, when a received frame is a transmission right transferring frame and a data frame, the transmission right transferring frame may be immediately transmitted, thereby troubles such as incorrectness of order are avoided even if plural transmission right transferring frames are held in the receiving buffers. Further, transmission right transferring is suppressed to save power, and simultaneously high efficiency in continuous data processing is achieved. As a specific implementation of this, a communication apparatus includes the frame decision unit 2 which performs extraction of the most recent frame and received frame decision, and the communication control unit 4 instructs the frame creating unit 3 to create a transmission right transferring frame on the basis of decision of the frame decision unit 2.

### Embodiment 3.

In a data communication method according to a third embodiment of the present invention, it is decided whether a station is in the connection state, and comparison is made between address field numbers, to decide self receiving. A construction of a data communication apparatus of the third embodiment is identical to that of the first embodiment, and therefore will be described with reference to figure 1. Assume that one station 10 is "A station" and the other station 20 is "B station" in figure 1.

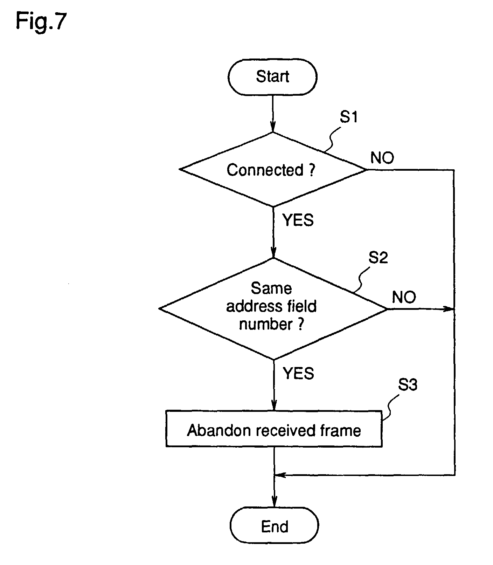

Figure 7 is a flowchart showing a procedure of self receiving decision. Referring to figure 7, Steps S1 to S3 are a connection decision step, an address field decision step, and a received frame abandoning step, respectively. More specifically, in Step S1, it is decided whether the one station is in the connection state, in Step S2, it is decided whether an address field number of a received frame matches an address field number of a frame transmitted from the one station, and in Step s3, a received frame is abandoned.

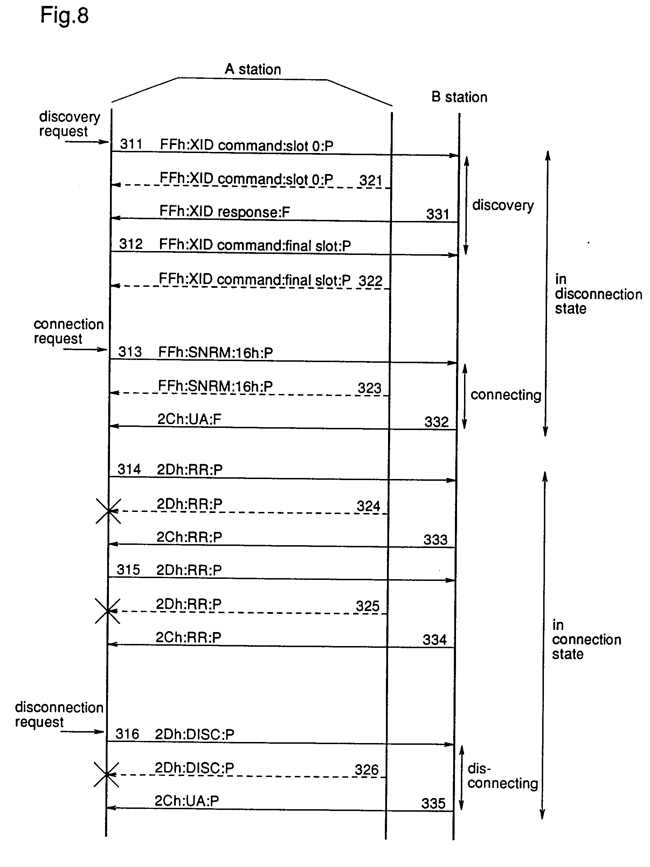

In this embodiment, assume that communication is performed between the A station in which self receiving occurs because any self receiving measure is not taken by a hardware or a device driver, and the B station in which self receiving does not occur in hardware or the like. Figure 8 shows a sequence of discovery, connection, and disconnection in IrDA communication of the A station. Constructions of data communication apparatuses of these stations are identical to that in figure 1, and when the transmitting/receiving unit 1 receives a frame, the frame decision unit 2 performs self receiving decision in figure 7. Hereinafter, the data communication method of the third embodiment will be described following a sequence in figure 8, and with reference to figures 1 and 7. Specifically, (1) Discovery, (2) Connection, (3) Processing in Connection State, and (4) Disconnection in the A station will be described.

### (1) Discovery

Discovery in figure 8 is discovery of slot number 1. In this discovery, "FFh" is used as an address field number of a frame transmitted from a station which activated the discovery, and "FEh" is used as an address field number of a frame transmitted from a station which responds to the station which activated the discovery.

Initially, in the A station, a frame creating unit 3 creates a discovery request frame, i.e., an XID command, as a frame 311 of slot "0", and a transmitting/receiving unit 1 transmits the XID command to the B station. Immediately after this, in the A station, the frame 311 is received as a frame 321 by self receiving. When the transmitting/receiving unit 1 of the A station has received the frame 321, it passes the frame 321 to the frame decision unit 2, which performs self receiving decision along flow in figure 7.

This will be described along flow in figure 7. In Step S1, it is checked whether the one station is in the connection state, and when decided that it is, Step S2 is performed, and self receiving decision is continued, whereas when decided that it is not, the self receiving decision is completed. In Step S2, the frame decision unit 2 decides whether an address field number of a received frame matches an address field number of a frame transmitted from the one station. When decided 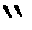 YES (equal)*"*, Step S3 is performed, whereas when decided 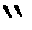 NO*"* (unequal)*"*, self receiving decision is completed without Step S3. In Step S3, the received frame is abandoned. Where self receiving decision is completed in Step S1, or where self receiving decision is completed in Step S2 without Step S3, the frame decision unit 2 outputs the received frame from the transmitting/receiving unit 1 to the communication control unit 4. On the other hand, where self receiving decision is completed through Step S3, the frame decision unit 2 will not output a received frame.

Self receiving decision with respect to the frame 321 will be described. In Step S1, self receiving decision is immediately completed, since the one station is not in the connect ion state at a discovery stage, and the frame 321 is passed to the communication control unit 4.

Then, normal receiving processing is performed to the frame 321. At a discovery stage in the IrDA communication method, after transmission of the XID command, a frame other than an XID response frame is ignored if received. The frame 321 is not the XID response frame, and therefore is ignored.

Meanwhile, the B station which has received the frame 311, to inform the A station of information about the B station, it transmits an XID response frame 331 to the A station, in which the transmitting/receiving unit 1 receives the frame 331, and then along flow in figure 7, the frame 331 is output to the communication control unit 4 and processed as in the case of the frame 321. The A station retains the information of the B station, since the frame 331 is the XID response frame.

Then, the A station transmits an XID final slot frame 312. At this time, the A station receives a self-received frame 322 of the frame 312. In self receiving decision by the frame decision unit 2, the frame 322 is processed as in the case of the frames 321 and 331. The frame 322 is the XID final slot frame, and therefore is ignored according to the IrDA communication method.

Thus, in discovery, even if self receiving occurs, the frame decision unit 2 outputs the self-received frame on the basis of the self receiving decision in figure 7. Then, the self-received frame is processed according to the IrDA communication method, that is, ignored because it is not a prescribed frame, thereby normal processing is performed.

### (2) Connection

The A station performs connection to the B station. Initially, the A station transmits a connection request frame, i.e., an SNRM command frame 313 to the B station. An address field number of the SNRM command frame is 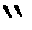 FFh*"*. At this time, the A station receives a frame 323, i.e. , a self-received frame of the frame 313.

When the transmitting/receiving unit 1 of the A station 10 has received the frame 323, the frame decision unit 2 performs self receiving decision in figure 7. However, the A station is not in the connection state during connection, and therefore self receiving decision is immediately completed in Step S1 as in the case of (1). Then, the frame 323 is ignored, since a frame other than a response frame to the connection request SNRM is supposed to be ignored according to the IrDA communication method, and the frame 323 is a command frame.

The SNRM command frame is used to inform the B station of a connection address number. The connection address number is a random number, which is selected from 01h to 7Fh at random, and with respect to an address field number of a frame transmitted in the connection state, the connection address is shifted one bit to the upper bit position, i.e., bit 7-1 position. In case of transmission from the primary station, bit 0 is set to 1, while in case of transmission from the secondary station, bit 0 is set to 0. Shown in figure 8 is a connection address 16h. Therefore, an address field number of a frame to-be-transmitted from the primary station is 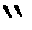 2Dh*"*, and an address field number of a frame to-be-transmitted from the secondary station is 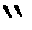 2Ch*"*.

Upon receipt of the frame 313, the B station transmits a connection response frame, i.e., a UA frame 332 to the A station. An address field number of the UA frame is 2Ch. Then the B station enters the connection state. On the other hand, the A station which has received the frame 332, through self receiving decision in figure 7, processes the frame 332, and then, there being a connection response, it also enters the connection state.

Thus, in connection, even if self receiving occurs, the frame decision unit 2 outputs the self-received frame on the basis of the self receiving decision in figure 7 as in discovery (1). Then, the self-received frame is processed according to the IrDA communication method, that is, ignored because it is not a prescribed frame, thereby normal processing is performed.

### (3) Processing in Connection State

Entering the connection state, the A station transmits an RR frame 314. The address field number of the frame 314 is 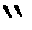 2Dh*"* as described above. At this time, the A station receives a frame 324, i.e., a self-received frame of the frame 314. When the transmitting/receiving unit 1 of the A station receives the frame 324, the frame decision unit 2 performs self receiving decision in figure 7.

In Step S1, decision is 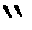 YES*"*, because the A station 10 is in the connection state, and then in Step S2, it is decided whether an address field number of the received frame 324 matches that of a frame transmitted from the A station. The frame 324 has the same address field number as the frame 314. Therefore, decision in Step S2 is 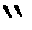 YES*"*, and then in step S3, the frame 324 is abandoned, and self receiving decision is completed. In this case, subsequent receiving processing will not be performed.

In the prior art communication method in which self receiving decision in figure 7 is not performed, the address field of the frame 324 matching that of the frame to be transmitted from the one station, disconnection is performed. However, in this embodiment, the frame 324 is not processed, and therefore such disconnection does not occur.

Upon receipt of the frame 314, the B station transmits an RR frame 333 as a response frame to the A station, in which the transmitting/receiving unit 1 receives the frame 333, and then the frame decision unit 2 performs self receiving in figure 7.

In Step S1, decision is 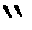 YES*"*, because the A station 10 is in the connection state, and then in Step S2, it is decided whether an address field number of the received frame 333 matches that of a frame transmitted from the A station. The address field number of the frame 333 is 2Ch, and different from the address field number 2Dh of the frame transmitted from the A station, and therefore in Step S2, decision is 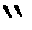 NO (unequal)*"*, so that self receiving decision is completed without Step S3. In this case, the received frame 333 is processed.

Thereafter, the A station transmits a response frame, i.e., an RR frame 315, and then receives a self-received frame 325 and a response frame 334 from the B station. The self-received frame 325 is processed as in the frame 324, and therefore it is abandoned in Step S3, and will not be processed. The frame 334 is processed as in the case of the frame 333 and will be processed.

### (4) Disconnection

The A station receives the frame 335. However, there is a disconnection request from an upper layer, so that the A station transmits a disconnection request frame, i.e., a DISC frame 316. Also at this time, although a self-received frame 326 of the frame 316 is received, the frame decision unit 2 performs self receiving decision, thereby it is decided that the A station is in the connection state, and an address field number of the frame 326 matches that of the frame transmitted from the A station, so that in Step S3, the frame 326 is abandoned.

Upon receipt of the disconnection request frame 316, the B station transmits a disconnection response frame 335, and then enters the disconnection state. The A station which has received the disconnection response frame 335, after self receiving decision, processes the frame 335 as in the frames 333 and 334, and then also enters the disconnection state, whereby communication link is completed.

As thus far described, in the data communication method according to the third embodiment, the self receiving decision is performed, which comprises performing the connection decision in which it is decided whether the one station is in the connection state, performing the address field decision in which an address field number of a received frame is compared with an address field number given to a frame transmitted from the one station, and performing the received frame abandoning in which the received frame is abandoned when there is a match between the address field numbers. Therefore, in case of connection state in which processing of a self-received frame as a received frame causes communication troubles, comparison is made between address field numbers to decide whether the received frame is the self-received frame, and when decided that it is, the frame is abandoned and will not be processed, so that communication troubles such as link disconnection by collision in the primary station, which would otherwise occur, can be avoided.

In addition, transmission starting and ending times are accurately detected, and comparison is made between them to decide whether self receiving or not, whereby speedy decision is performed without depending upon variations in the starting and ending times.

Yet in addition, the data communication apparatus according to the third embodiment, includes the frame decision unit 2 which abandons a received frame when the one station is in connection state and an address field number of a received frame matches that of an address field number given to a frame transmitted from the one station. Therefore, in case of connection state in which processing of a self-received frame as a received frame causes communication troubles, comparison is made between address field numbers to decide whether the received frame is the self-received frame , and when decided that it is, the frame is abandoned and will not be processed, so that communication troubles such as link disconnection by collision in the primary station, which would otherwise occur, can be avoided, and processing burden of the decision processing is not significant.

Further, both the self receiving decision of the third embodiment, and the received frame decision of the first embodiment, may be performed, wherein when a received frame is a transmission right transferring frame, and a data frame, the transmission right transferring frame is immediately transmitted. As a result, speedy and reliable decision in software is possible. In addition, power is saved by suppressing transmission right transferring, and high efficiency in continuous data processing is achieved. As a specific implementation of this, a data communication apparatus is provided with the frame decision unit 2 which performs self receiving decision and received frame decision, and the communication control unit 4 which instructs the frame creating unit 3 to create a transmission right transferring frame on the basis of the decision of the frame decision unit 2.

Still further, both the self receiving decision of the third embodiment, and the most recent frame extraction of the second embodiment may be performed, wherein a received frame is temporarily stored in a receiving buffer, and then fetched therefrom, and the most recent frame of the temporarily stored transmission right transferring frames is processed. As a result, speedy and reliable decision on self receiving in software is possible, and in addition, troubles such as order incorrectness can be avoided even if plural transmission right transferring frames are retained in the receiving buffers. As a specific implementation of this, a data communication apparatus is further provided with a receiving buffer, in which the transmitting/receiving unit 1 temporarily stores a received frame in the receiving buffer, and the frame decision unit 2 performs self receiving decision and most recent frame extraction to the frame fetched from the buffer.

Yet still further, both the self receiving decision of the third embodiment and the received frame decision of the first embodiment may be performed, wherein speedy and reliable decision on self receiving in software is possible, and in addition, troubles such as order incorrectness can be avoided even if plural transmission right transferring frames are retained in the receiving buffers. Further, in this case, power is saved by suppressing transmission right transferring, and high efficiency in continuous data processing is achieved. A data communication apparatus is implemented by adding the changes thereto.

It should be noted that the data communication methods of the first to third embodiments are implemented by recording a communication program which performs communication by these communication methods, and by executing the program in a computer, a work station, a personal terminal such as an electronic note, and so forth.

## Claims

1. A data communication method in which transmission/receiving is performed for each frame according to an unbalanced half-duplex high-level data link control communication method, and between one and the other stations, said method comprising the step of:
transferring transmission right to the other station, when the one station receives a frame, and the received frame is a transmission right transferring frame and is a data frame.

2. The data communication method of claim 1 further comprising:
a frame decision step including:
a transferring frame decision step in which it is decided whether the received frame is a transmission right transferring frame; and
a data frame decision step in which it is decided whether the received frame is a data frame; and
a transmitting step in which a transmission right transferring frame is transmitted to the other station when decided that the received frame is the transmission right transferring frame and is the data frame in said frame decision step.

3. A data communication method in which transmission/receiving is performed for each frame according to an unbalanced half-duplex high-level data link control communication method, and between one and the other stations, said method comprising the steps of:
temporarily storing a frame in a receiving buffer, and then fetching the frame therefrom when the frame is received; and
deciding whether a transmission right transferring frame is the most recent, when a frame of frames stored in the receiving buffer which is fetched therefrom and processed is the transmission right transferring frame, processing the transmission right transferring frame when decided that the transmission right transferring frame is the most recent, and abandoning the transmission right transferring frame when decided that the transmission right transferring frame is not the most recent.

4. The data communication method of claim 3 further comprising:
a most recent frame extracting step including:
a sequential reading step in which a least recent stored frame is read from the receiving buffer where received frames are temporarily stored;
a transferring frame decision step in which it is decided whether the read least recent frame is a transmission right transferring frame;
a stored frame decision step in which it is decided whether a transmission right transferring frame is stored in the receiving buffer; and
a received frame abandoning step in which the read received frame is abandoned when decided that the read received frame is a transmission right transferring frame in said transferring frame decision step and when decided a transmission right transferring frame is stored in the receiving buffer in said stored frame decision step; and
a processing step in which receiving processing is performed to a received frame which is not abandoned but output in said most recent frame extracting step.

5. A data communication method in which transmission/receiving is performed for each frame according to an unbalanced half-duplex high-level data link control communication method, and between one and the other stations, said method comprising the step of:
abandoning a received frame when an address field number of the received frame matches an address field number of a frame transmitted from the one station, in the connection state.

6. The data communication method of claim 5 further comprising:
a self receiving decision step including:
a connection decision step in which it is decided whether current communication is in the connection state;
an address field decision step in which comparison is made between the address field number of the received frame and the address field number of the frame transmitted from the one station, to decide whether there is a match between them; and
a received frame abandoning step in which the received frame is abandoned, when decided that the communication is in the connection state in said connection decision step and when decided that there is the match in said address field decision step; and
a processing step in which receiving processing is performed to a received frame which is not abandoned but output in said self receiving decision step.

7. A data communication method in which transmission/receiving is performed for each frame according to an unbalanced half-duplex high-level data link control communication method, and between one and the other stations, said method comprising the steps of:
temporarily storing a frame in a receiving buffer and then fetching the frame therefrom when the frame is received;
processing a most recent frame of frames stored in the receiving buffer with respect to a transmission right transferring frame, and abandoning a transmission right transferring frame other than the most recent; and
transferring transmission right to the other station when the processed most recent frame is a transmission right transferring frame and is a data frame.

8. A data communication method in which transmission/receiving is performed for each frame according to an unbalanced half-duplex high-level data link control communication method, and between one and the other stations, said method comprising the steps of:
abandoning a received frame when an address field number of the received frame matches an address field number of a frame transmitted from the one station in the connection state; and
transferring transmission right to the other station when a frame which is not abandoned but processed is a transmission right transferring frame and is a data frame.

9. A data communication method in which transmission/receiving is performed for each frame according to an unbalanced half-duplex high-level data link control communication method, and between one and the other stations, said method comprising the steps of:
abandoning a received frame when an address field number of the received frame matches an address field number of a frame transmitted from the one station in the connection state;
temporarily storing a received frame which is not abandoned but processed in a receiving buffer and then fetching the received frame therefrom; and
processing a most recent frame of frames stored in the receiving buffer with respect to a transmission right transferring frame, and abandoning a transmission right transferring frame other than the most recent.

10. A data communication method in which transmission/receiving is performed for each frame according to an unbalanced half-duplex high-level data link control communication method, and between one and the other stations, said method comprising the steps of:
abandoning a received frame when an address field number of the received frame matches an address field number of a frame transmitted from the one station in the connection state;
temporarily storing a received frame which is not abandoned but processed in a receiving buffer and then fetching the received frame there from;
processing a most recent frame of frames stored in the receiving buffer with respect to a transmission right transferring frame, and abandoning a transmission right transferring frame other than the most recent; and
transferring transmission right to the other station when the most recent frame is a transmission right transferring frame and is a data frame.

11. A data communication apparatus which performs transmission/receiving for each frame according to an unbalanced half-duplex high-level data link control communication method, said apparatus comprising:
a transmitting/receiving unit for receiving data as a frame through a transmission medium, and transmitting data as a frame to the transmission medium;
a frame creating unit for creating a frame to be transmitted and outputting the frame to said transmitting/receiving unit;
a frame decision unit for performing frame decision including transferring frame decision in which it is decided whether the received frame is a transmission right transferring frame and data frame decision in which it is decided whether the received frame is a data frame; and
a communication control unit for instructing said frame creating unit to create and output a transmission right transferring frame, when decided that the received frame is the transmission right transferring frame and is the data frame from a result of the frame decision of said frame decision unit.

12. A data communication apparatus which performs transmission/receiving for each frame according to an unbalanced half-duplex high-level data link control communication method, said apparatus comprising:
a transmitting/receiving unit for receiving data as a frame through a transmission medium, and transmitting data as a frame to the transmission medium;
a receiving buffer for temporarily storing the frame received by said transmitting/receiving unit;
a frame decision unit for performing sequential reading in which a least recent stored frame is read from the receiving buffer where the received frame is temporarily stored, transferring frame decision in which it is decided whether the read least recent frame is a transmission right transferring frame, stored frame decision in which it is decided whether a transmission right transferring frame is stored in the receiving buffer, and received frame abandoning in which the read received frame is abandoned when decided that the read received frame is the transmission right transferring frame and when decided that the transmission right transferring frame is stored in the receiving buffer, thereby extracting the most recent frame from the frames stored in said receiving buffer with respect to a transmission right transferring frame; and
a communication control unit for performing control so that the frame extracted by said frame decision unit is processed.

13. A data communication apparatus which performs transmission/receiving for each frame according to an unbalanced half-duplex high-level data link control communication method, said apparatus comprising:
a transmitting/receiving unit for receiving data as a frame through a transmission medium, and transmitting data as a frame to the transmission medium;
a frame decision unit for performing connection decision in which it is decided whether current communication is in the connection state with respect to the frame received by said transmitting/receiving unit, and address field decision in which comparison is made between an address field number of the received frame and an address field number of a frame transmitted from said apparatus, to decide whether there is a match between them, thereby deciding whether the received frame is a self-received frame in the connection state, and abandoning the self-received frame when decided that the received frame is the self-received frame in the connection state; and
a communication control unit for performing control so that a received frame which is not abandoned by said frame decision unit is processed.

14. A recording medium in which a data communication program which performs transmission/receiving for each frame according to an unbalanced half duplex high-level data link control communication method is stored, said program comprising the steps of:
a frame receiving step in which a frame is received;
a transferring frame decision step in which it is decided whether the received frame is a transmission right transferring frame;
a data frame decision step in which it is decided whether the received frame is a data frame;
a transmission right transferring frame creating step in which a transmission right transferring frame is created when decided that the received frame is the transmission right transferring frame in said transferring frame decision step and when decided that the received frame is the data frame in said data frame decision step; and
a transmitting step in which the created transmission right transferring frame is transmitted.

15. A recording medium in which a data communication program which performs transmission/receiving for each frame according to an unbalanced half duplex high-level data link control communication method is stored, said program comprising the steps of:
a frame receiving step in which a frame is received;
a temporal storage step in which the received frame is temporarily stored in a receiving buffer;
a sequential reading step in which a least recent stored frame is read from the receiving buffer;
a transferring frame decision step in which it is decided whether the read least recent received frame is a transmission right transferring frame;
a stored frame decision step in which it is decided whether a transmission right transferring frame is stored in the receiving buffer;
a received frame abandoning step in which the read received frame is abandoned when decided that the read received frame is the transmission right transferring frame in said transferring frame decision step and when decided that the transmission right transferring frame is stored in the receiving buffer in said stored frame decision step;
a most recent frame extracting step in which the read received frame is output in one of cases where it is decided that the read received frame is not the transmission right transferring frame in said transferring frame decision step and where it is decided that the transmission right transferring frame is not stored in the receiving buffer in said stored frame decision step; and
a processing step in which the received frame obtained in said most recent frame extracting step is processed.

16. A recording medium in which a data communication program which performs transmission/receiving for each frame according to an unbalanced half duplex high-level data link control communication method and between the one and the other stations, is stored, said program comprising the steps of:
a frame receiving step in which a frame is received;
a connection decision step in which it is decided whether current communication is in the connection state;
an address field decision step in which comparison is made between an address field number of the received frame and an address field number of a frame transmitted from the one station, to decide whether there is a match between them;
a received frame abandoning step in which the received frame is abandoned when decided that the communication is in the connection state in said connection decision step and when decided that there is the match in said address field decision step; and
a processing step in which receiving processing is performed to the received frame in one of cases where it is decided that the communication is not in the connection state in said connection decision step and where it is decided that there in no match in said address field decision step.
